# EUROPEAN PATENT SPECIFICATION

(11) **EP 3 675 310 B1**
(45) Date of publication and mention of the grant of the patent: **09.12.2026**
(21) Application number: 19383222.7
(22) Date of filing: 31.12.2019
(51) Int. Cl.: H02J 3/38, H02J 3/50

(54) **WIND TURBINE CONTROL SYSTEM AND ASSOCIATED METHOD**
WINDTURBINENSTEUERUNGSSYSTEM UND ZUGEHÖRIGES VERFAHREN
SYSTÈME DE COMMANDE D'ÉOLIENNE ET PROCÉDÉ ASSOCIÉ

(30) Priority: 31.12.2018 EP 18383010
(43) Date of publication of application: 01.07.2020
(73) Proprietor: Nordex Energy Spain, S.A.U., 31395 Barasoain (Navarra) (ES)
(72) Inventor: GARCÍA SAYÉS, José Miguel, 31395 BARASOAIN (NAVARRA) (ES); BERIAIN GUEMBE, Guillermo, 31395 BARASOAIN (NAVARRA) (ES); GARCÍA BARACE, Alberto, 31395 BARASOAIN (NAVARRA) (ES); GIL GURUCEAGA, Javier, 31395 BARASOAIN (NAVARRA) (ES); ORTIZ IRIGOYEN, Javier Daniel, 31395 BARASOAIN (NAVARRA) (ES); ARLABÁN GABEIRAS, Teresa, 31395 BARASOAIN (NAVARRA) (ES); GONZALEZ MURUA, Alejandro, 31395 BARASOAIN (NAVARRA) (ES); ROYO GARCÍA, Ricardo, 31395 BARASOAIN (NAVARRA) (ES); NUÑEZ POLO, Miguel, 31395 BARASOAIN (NAVARRA) (ES)
(74) Representative: Pons IP

(56) References cited:
- EP-A1- 2 696 070
- US-A1- 2010 025 994

## Description

### OBJECT OF THE INVENTION

The present invention relates to a control system and a control method of a wind turbine configured for calculating an initial setpoint and sending it to the control system of a wind farm and receiving a final setpoint taking into account dynamic variations in the needs and possibilities of reactive power generation of said wind turbine with respect to maximum reactive power generation capacities based on the active power it can generate at all times.

### BACKGROUND OF THE INVENTION

Normally, grid integration regulations stipulate as a requirement for connecting a wind farm to a power grid having available, under any condition of generating active power less than or equal to the rated power of the wind farm, a minimum reactive power generation capacity required in the wind farm to offer support to the power grid in the control of the voltage thereof. This in turn translates into minimum reactive power generation capacities required of the wind turbines of the wind farm in an individual manner, and as they are equipped with power converters, they are converted into a suitable solution for addressing the requirements of the grid operator, minimising the need for connecting additional equipment in the sub-station. Said reactive power capacity is referred to as minimum reactive power capacity required.

Wind turbines have maximum electric capacities sized in turn by the minimum of the maximum capacities of the components of their electric drive (particularly generator and power converter). The maximum electric capacities are usually specified in terms of apparent power. Said maximum capacities provide an indication of the maximum active power and reactive power which the wind turbines can supply during a given time. Thus, there are often different values for the maximum rated electric capacity (i.e., that which can be sustained in a steady manner) than for transient maximum electric capacities (those which will only be sustained in a limited manner in time, for example, for less than ten minutes, one minute or several seconds). In turn, the maximum reactive power capacity required can be lower than the maximum reactive power capacity.

The rated apparent power S determines the rated steady active power and reactive power levels that the wind turbines can generate without exceeding the rated current of the electrical elements that are part of the electric drive (primarily generator and converter). It is usually calculated with a rated active power value P and a rated reactive power value Q according to the following expression: $S = \sqrt{{P}^{2} + {Q}^{2}}$ (1)

In the state of the art, the rated reactive power and rated active power values determine the maximum active power and reactive power values which can be sustained in a steady manner, for which purpose those control systems responsible for calculating the active and reactive power setpoints of the wind turbines are configured so that said setpoints do not exceed said maximum values. That is, the control systems of the state of the art are configured such that the slow dynamics control loops will not calculate active power setpoints greater than the rated active power nor will they calculate reactive power setpoints greater than the rated reactive power. This occurs both in the wind farm and in the wind turbine (the control systems of the wind farm and of each wind turbine are configured as previously specified).

Generally, the rated reactive power in the wind farm coincides with a minimum reactive power capacity required which must be guaranteed for compliance with grid integration codes applicable at the point of connection of the wind farm to the power grid.

Reactive power is generally the control variable used for control of the voltage of the power grid. There are different control modes for controlling the voltage of the power grid, where it is generally the grid operator who specifies the most appropriate control mode in each case. Said operating modes coincide with different possible implementations in the control system of the wind farm for the control of reactive power:
- control of reactive power based on reactive power references received directly from a remote control centre (remote control centre which can belong to the wind farm operator or to the power grid operator);
- voltage control at a point of the power grid to which the wind farm is connected which, based on the voltage measurement taken at that point and on a voltage reference provided by the power grid operator (either directly or indirectly through the wind farm operator), calculates a global reactive power setpoint for the wind farm;
- control of the power factor at a point of the power grid to which the wind farm is connected which, based on the active power measurement taken at that point and on a power factor reference provided by the power grid operator (either directly or indirectly through the wind farm operator), calculates a global reactive power setpoint for the wind farm;

Based on the power grid code or the control mode selected by the wind farm operator, the control system of the wind farm is configured to calculate a total reactive power setpoint for the wind farm which is later distributed in an individual manner among the different wind turbines to comply with the required setpoint. To that end, the control system of the wind farm calculates individual reactive power setpoints for the wind turbines which, when added together, amount to the total reactive power setpoint for the wind farm.

There are solutions in the state of the art in which the control system of the wind farm performs the distribution either equally among the wind turbines of the wind farm, or it sends different setpoints for the wind turbines of the wind farm taking into consideration thermal or electric loss criteria, but always without exceeding a predetermined maximum reactive power capacity.

Document US2010025994A1 discloses a wind turbine generator control system for controlling output of a plurality of tightly-coupled windfarms connected at a point of common coupling with a power system grid. A master reactive control device employs algorithms whose technical effect is to coordinate the real power, reactive power and voltage output of the multiple windfarms. The controller incorporates a reactive power regulator that can be used to regulate reactive power, power factor or voltage at the point of common coupling and an active power regulator that can be used to regulate real power at the point of common coupling; such that each windfarm is not asked to contribute or violate its own operating capability.

### DESCRIPTION OF THE INVENTION

The present invention relates to a control system and a control method of a wind turbine configured to generate an active power greater than the rated active power without exceeding the limit set by the apparent power, by means of calculating a desired maximum reactive power limit less than the rated reactive power, i.e., less than the minimum reactive power capacity required of the wind turbine.

In the case of a wind turbine, the rated apparent power is set in the same way as in the state of the art. According to the invention, however, the steady active power may exceed the rated active power, for which the generated reactive power will be less than the rated reactive power.

The maximum reactive power limit desired corresponds to the reactive power which can be generated without limitations in the active power. It is calculated based on an initial active power or torque setpoint to which electric limitations have not been applied and which is dependent on the operating conditions of the wind turbine (wind speed, temperature, capacity of the mechanical components) and on the rated apparent power. Said maximum reactive power limit desired is sent to a central wind farm control system for it to calculate a final reactive power setpoint, which once the maximum reactive power limits desired of each of the wind turbines with operating conditions that allow generating an active power greater than the rated active power have been taken into account, the control system will,send the final reactive power setpoint to each of them, in the attempt to keep it as close as possible to the available reactive power, without limitation, of each of them, i.e., to the respective maximum reactive power limits desired.

Once the final reactive power setpoint has been received, the control system of the wind turbine will calculate a final torque or active power setpoint for the wind turbine which, taking into account the capacity of the electric drive, assures that there is available reactive power capacity to comply with the final reactive power setpoint received from the control system of the global reactive power setpoint in the wind farm. To that end, it will apply a maximum limit to the torque or initial power setpoint based on the final reactive power setpoint received from the control system of the wind farm and based on the capacity of the electric drive.

In one embodiment, the steady reactive power can also exceed the rated reactive power.

In a wind farm there can be wind turbines with different operating conditions:
- first wind turbines with operating conditions (wind speed and/or rotational speed, temperature of components, etc.) that give rise to initial active power or torque setpoints resulting from the control of the wind turbine which cannot be taken on without compromising the minimum reactive power capacities required, and
- second wind turbines with operating conditions (wind speed and/or rotational speed, temperature of components, etc.) that are such that the initial active power or torque setpoints resulting from the control of the wind turbine for said operating conditions can be taken on by the electric drive without compromising the minimum reactive power capacities required.

This would be the case in situations in which the operating conditions of the second wind turbines are such that they cannot generate an active power greater than the rated active power (active power which can be generated in a sustained manner and simultaneously with the rated reactive power) and therefore be taken on by the electric drive without compromising the minimum reactive power capacities required, whereas the operating conditions of the first wind turbines are such that they can generate an active power greater than the rated active power provided that the capacity of the electric drive is assured to that end.

For that purpose, the control system of at least one first wind turbine is configured to calculate a maximum reactive power limit desired which is a function of the initial active power or torque setpoint and of the capacity of the electric drive, and sending said maximum reactive power limit desired to the control system of the wind farm.

This allows dedicating the highest possible fraction of the set of electric capacities (apparent power) of the wind farm to the active power generation such that given favorable wind conditions, the at least one first wind turbine may exceed the rated active power level.

In order to satisfy a global reactive power setpoint of the wind farm, avoiding the necessity to limit the initial active power or torque setpoints resulting from the control of the first wind turbines, the control system of the wind farm is configured such that it can calculate the individual reactive power setpoints taking into account for the at least one first wind turbine at least one maximum reactive power limit desired.

In the case of the first wind turbines, taking into account that the operating conditions of said wind turbines are such that they may exceed the rated active power level (that which can be provided in a sustained manner at the same time as the rated reactive power level), the maximum reactive power limit desired is lower than the maximum reactive power capacity required (which is equal to the rated reactive power in one embodiment).

The control system and a control method of a wind turbine of the present invention is configured to calculate an initial active power setpoint based on which a maximum reactive power limit desired is calculated and sent to the control system of a wind farm, and receiving a final reactive power setpoint taking into account dynamic variations in the reactive power generation possibilities of said wind turbine with respect to maximum reactive power generation capacities. The invention also relates to the wind turbine comprising said control system of a wind turbine.

On the other hand, the wind turbine must be configured in a suitable manner in order to achieve the correct operation of the control method of the wind farm:
Thus, the wind turbine is configured to calculate, based on an initial torque (or power) control setpoint, a maximum reactive power limit desired which would allow not limiting the initial torque (or active power) control setpoint resulting from the control loops of the wind turbine and sending it to the control system of the wind farm. The initial torque (or power) control setpoint corresponds to a torque (or power) setpoint to which limitations associated with the capacities of the electric drive have not yet been applied; nonetheless, it can be limited based on capacities of mechanical components.

Said maximum reactive power limits desired will be taken into account, as far as possible, by the control system of the wind farm when distributing the reactive power setpoints among the different wind turbines of the wind farm required for meeting, on a global level, the reactive power generation requirements of the power grid operator associated for example with controls of voltage at the point of connection of the farm to the power grid.
The control system of a wind turbine of the present invention is configured to:
- calculate an initial torque/active power control setpoint desired based on the operating conditions of the wind turbine;
- calculate at least one maximum reactive power limit desired based on:
   at least one maximum electric capacity in the operating conditions of the wind turbine
   the initial torque/active power control setpoint desired,
   such that it is not necessary to apply limitations to the initial torque/active power control setpoint desired and the at least one maximum electric capacity is not exceeded;
- send the at least one maximum reactive power limit desired lower than a minimum reactive power capacity required to a central control system of the farm.

Optionally, the control system is configured to calculate the maximum reactive power limit desired when the operating conditions are such that the initial torque/active power control setpoint is greater than a maximum active power limit.

Optionally, when the operating conditions are such that the initial torque/active power control setpoint is not greater than the maximum active power limit, the control system is additionally configured to calculate a possible maximum reactive power limit based on:
at least one maximum electric capacity in the operating conditions of the wind turbine
the initial torque/active power control setpoint desired,
such that it is not necessary to apply limitations to the initial torque/active power control setpoint desired and the at least one maximum electric capacity is not exceeded;
- send the at least one possible maximum reactive power limit to a central control system of the farm.

Preferably, the at least one maximum electric capacity corresponds at least to a maximum electric capacity of a generator and to a maximum electric capacity of a power converter.

The control system of the wind turbine is configured to operate the wind turbine according to different control modes wherein the wind turbine is enabled to generate an active power greater than the rated power for different time intervals: a mode in permanent regime (above 10 minutes), for a time of not more than 10 minutes or transient (for tenths of a second).

Moreover, depending on the control mode of the wind turbine, i.e., the estimated time in which an above-normal active power is going to be generated, which may entail exceeding the at least one maximum electric capacity, the control system uses as a reference permanent maximum electric capacities or transient maximum capacities both for the generator and for the converter.

Optionally, if the control mode of the generator is such that an active power level which could cause the rated apparent power in steady-state of the generator and/or converter to be exceeded is allowed (i.e., a Pref such that sprt(Pref^2+Qmax^2)>Sperm), the control system uses the permanent maximum capacities of the generator and converter for calculating the at least one maximum reactive power limit desired.

Optionally, for controls in which the power can be increased such that sprt(Pref^2+Qmax^2)>Srated for a time of not more than 10 minutes, the control system takes into account a transient maximum capacity of the generator and a maximum capacity of the converter.

Optionally, for controls in which the power can be increased above the rated power for a time of not more than tenths of a second, the control system takes into account a transient maximum capacity of the generator and a transient maximum capacity of the converter.

Optionally, the control system is configured to additionally:
- receive a required reactive power setpoint from a control system of the wind farm (SGCS)
- calculate at least one maximum active power limit based on:
   the at least one maximum electric capacity in the operating conditions of the wind turbine;
   the reactive power setpoint received from the control system of the wind farm (SGCS);
- apply at least one maximum active power limit calculated in the step prior to the initial torque/active power control setpoint desired for calculating a final torque/active power control setpoint.

Optionally, the at least one maximum electric capacity is of at least one of the following types:
- permanent
- transient (ten minutes)
- transient (seconds).

The invention also refers to a control method of a wind turbine according to the above previously described, being the subject-matter of claims 11 to 20, here included by reference.

### BRIEF DESCRIPTION OF THE DRAWINGS

Figure 1 shows a general diagram of the control system and control method of a wind farm of the present invention.
Figure 2 shows a block diagram of the control system and control method of a wind farm of the present invention.
Figure 3 shows a block diagram of the calculation of reactive power setpoints with the system and according to the control method of a wind farm of the present invention.
Figures 4 and 5 show a general diagram of the control system and control method of a wind turbine of the present invention.
Figure 6 shows a comparison between a control system and control method of a wind farm according to the state of the art and the control system and control method of a wind farm according to the present invention.

### PREFERRED EMBODIMENT OF THE INVENTION

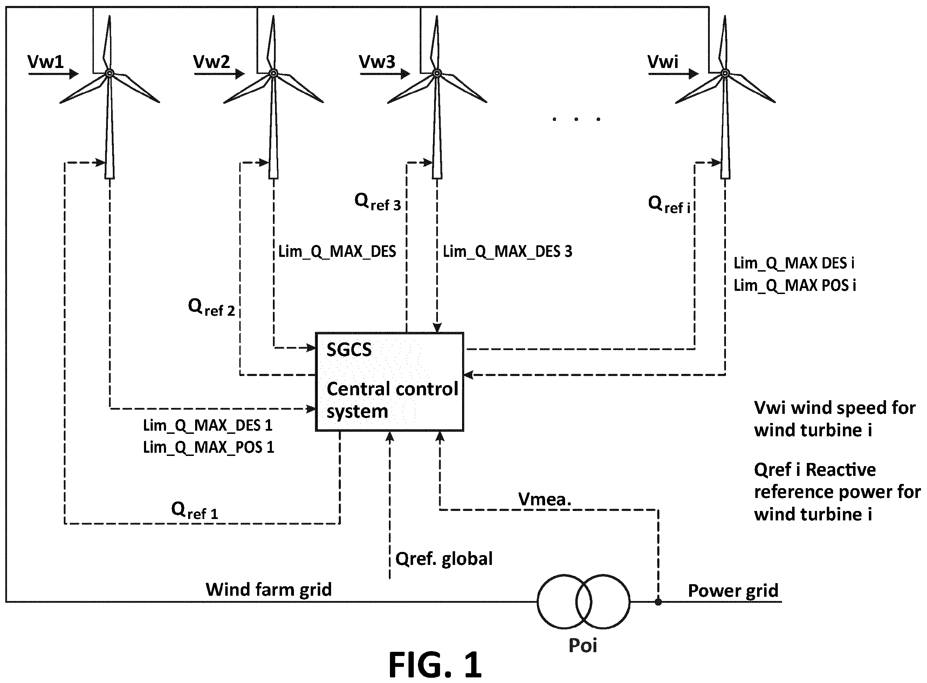

Figure 1 shows a general diagram of the control system and control method of a wind farm of the present invention. Said figure shows that, based on the operating conditions (wind speed of each Vv_1,...,Vv_i, type of power curve enabled according to the mechanical limits, etc...), the wind turbines send to the control system of the wind farm SGCS information about reactive power generation needs (maximum reactive power limit desired, Lim_Q_max_des) and about reactive power generation possibilities (possible maximum reactive power limit, Lim_Q_max_pos) according to the available margin of the capacity of the electric drive and of the active power they can generate. The control system of the farm in turn sends to them, once said maximum reactive power limits desired and possible maximum reactive power limits have been taken into account, the individual reactive power setpoints Qref1, ..., Qrefi to be generated by the at least two wind turbines of the wind farm which will respect, as far as possible and depending on the global power setpoint Qref_global (which can be received by the SGCS or calculated by it based on the voltage measured at the point of connection of the wind farm to the grid POI), the maximum reactive power limits desired for maximising active power production of the wind farm.

The global power setpoint Qref_global can be received by the SGCS or calculated by it based on the voltage measured at the point of connection of the wind farm to the grid POI or of the power factor, according to the control that has been enabled so as to comply with the grid integration code.

Thus, the control system of the wind farm of the invention is configured to:
- calculate a global reactive power setpoint (Qref_global) to be generated by the at least two wind turbines of the wind farm at the point of connection of the farm to the power grid;
- calculate individual reactive power setpoints (Qref1, ..., Qrefi) for each of the at least two wind turbines of the wind farm such that they add up to the global reactive power setpoint (Qref_global);
   wherein the system is additionally configured to:
- receive from at least one first wind turbine of the wind turbines of the wind farm a maximum reactive power limit desired (Lim_Q_Max_Des) lower than a minimum reactive power capacity required of the wind turbine; and
- calculate the individual reactive power setpoints (Qref1, ..., Qrefi) for each of the at least two wind turbines of the wind farm such that the individual reactive power setpoint for the at least one first wind turbine of the wind farm does not exceed the maximum reactive power limit desired (Lim_Q_Max_Des).

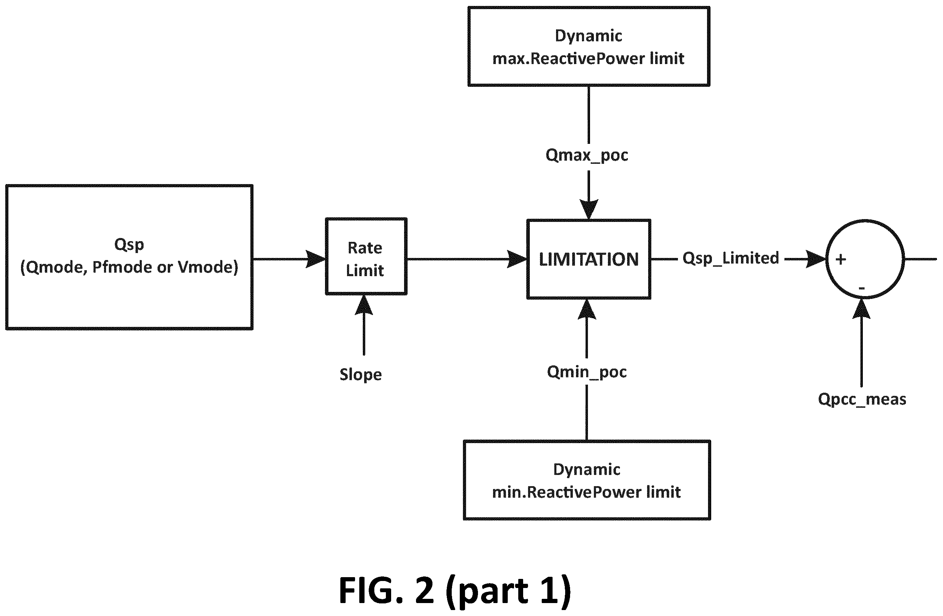

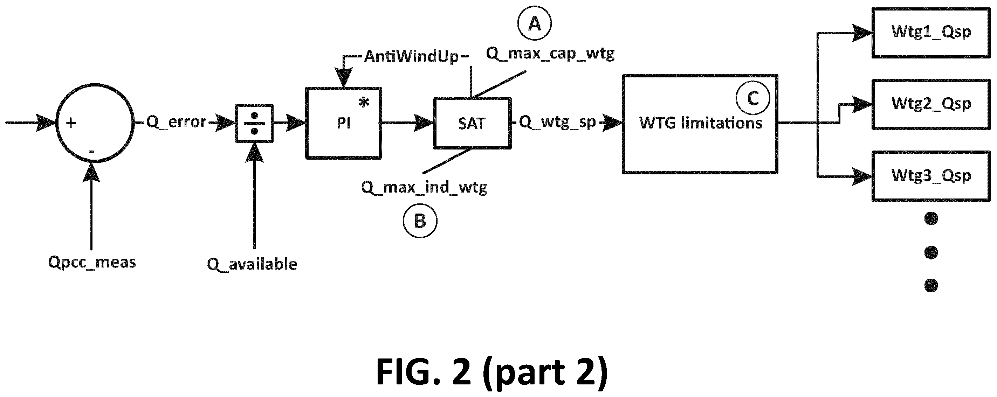

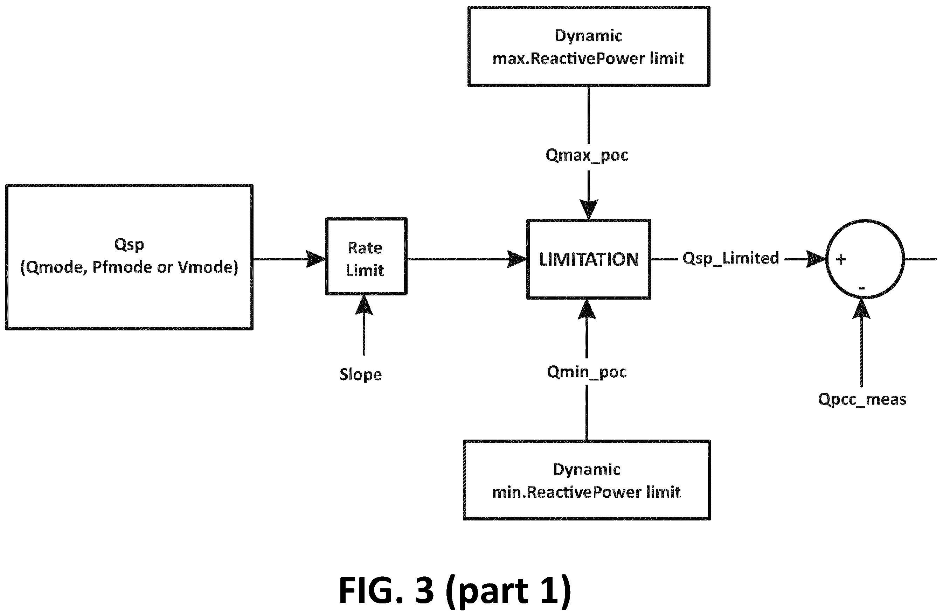

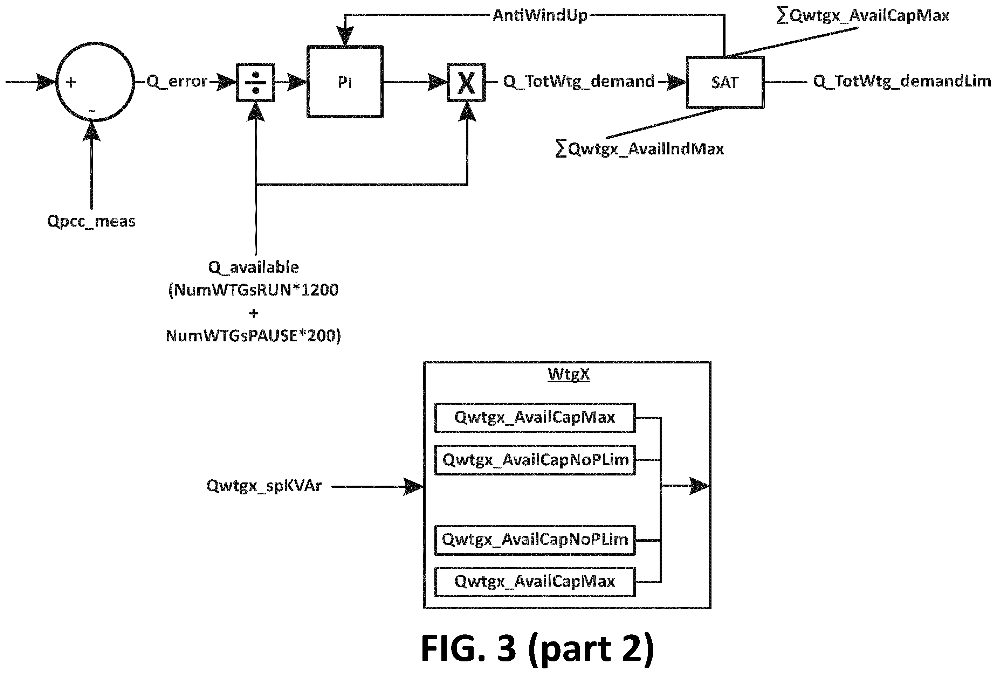

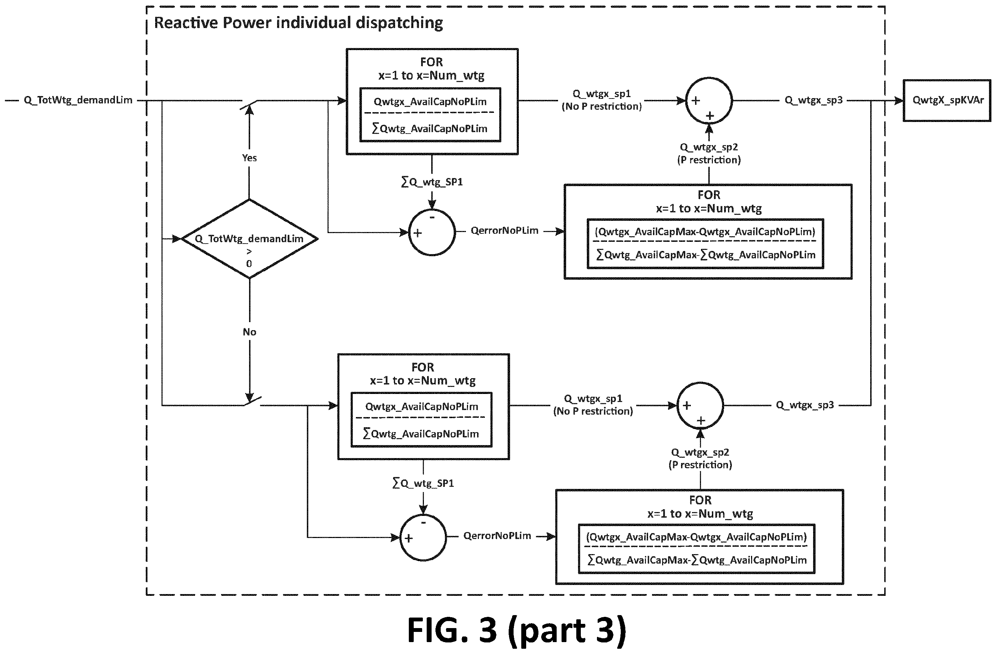

Figure 2 shows a block diagram of the control system and control method of a wind farm of the present invention. Block C includes the detail of the system for calculating individual reactive power setpoints (reactive power individual dispatching) which would correspond to Figure 3. The individual reactive power setpoint which is finally sent to the wind turbines Qrefi is a setpoint corrected Q_wtg_sp3 by means of adding the correction term Q_wtg_sp2 in Figure 3 to a the setpoint initially calculated Qwtg_sp1, taking into account the maximum reactive power limits possible and the maximum reactive power limits desired of the wind turbines. If it is possible to comply with the global setpoint of the farm with this first Q setpoint, the correction term Q_wtg_sp2 will have null value.

In particular, the calculation of the correction term for each of the initial reactive power setpoints of each wind turbine may be carried out in a proportional manner to the difference between the possible maximum reactive power limit and the desired maximum reactive power limit of each wind turbine.

Figure 3 shows a block diagram of the calculation of reactive power setpoints with the system and according to the control method of a wind farm of the present invention. In said figure there are two branches for calculating the Q setpoints for the wind turbines, depending on whether the global setpoint meets an inductive Q (Q g<0) or capacitive Q (Q>0) need.

As can be seen in Figures 2 and 3, the control system of the wind farm of the invention is additionally configured to set at least one first reactive power limit (Qwtg_Avail_Cap_No P_Lim, Qwtg_Avail_Ind_No P_Lim,) for each of the wind turbines chosen from the maximum reactive power limit desired and the minimum reactive power capacity required, with the one chosen being the lowest in absolute value.

Since there are wind turbines with operating conditions that are such that they do not have the possibility of greater active power P generation, and therefore they do not have a maximum reactive power limit desired, two implementations are possible:
- all the wind turbines send the maximum reactive power limit desired, the control system of the wind turbine setting for those which do not have greater active power generation capacity (Pref1 <Prated) the minimum reactive power capacity required for the wind turbine as a value for the first reactive power limit; or
- only those the wind turbines that do have greater active power generation capacity (Pref1 <Prated) send the maximum reactive power limit desired, in which case the wind farm control system sets the minimum reactive power capacity required for the wind turbine, value which it has stored for each of the wind turbines of the wind farm, as a value for the first reactive power limit.

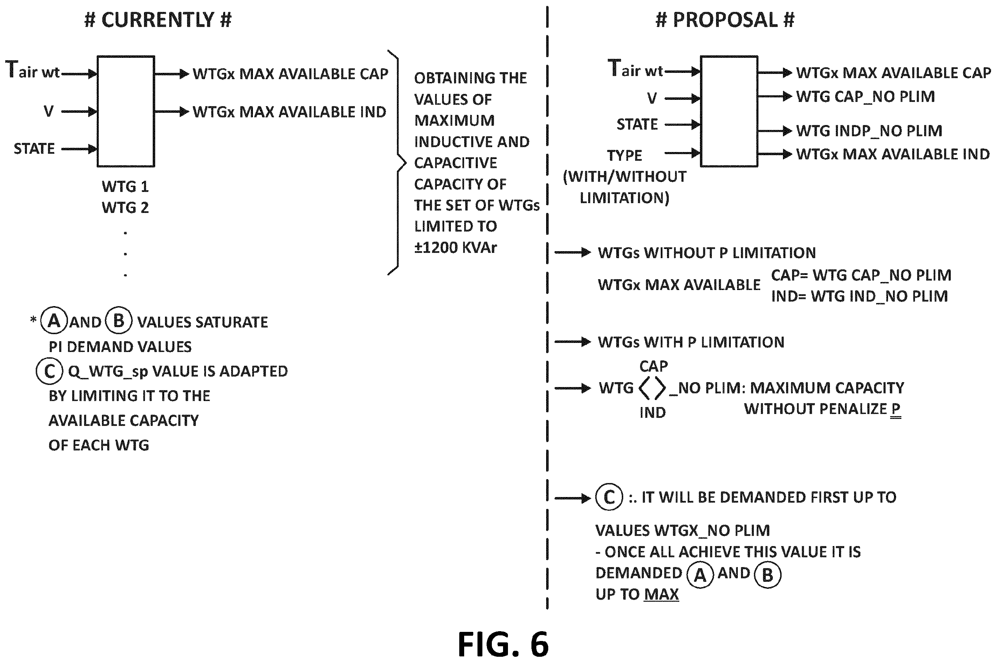

Figure 6 shows a comparison between a control system and control method of a wind farm according to the state of the art and the control system and control method of a wind farm according to the present invention.

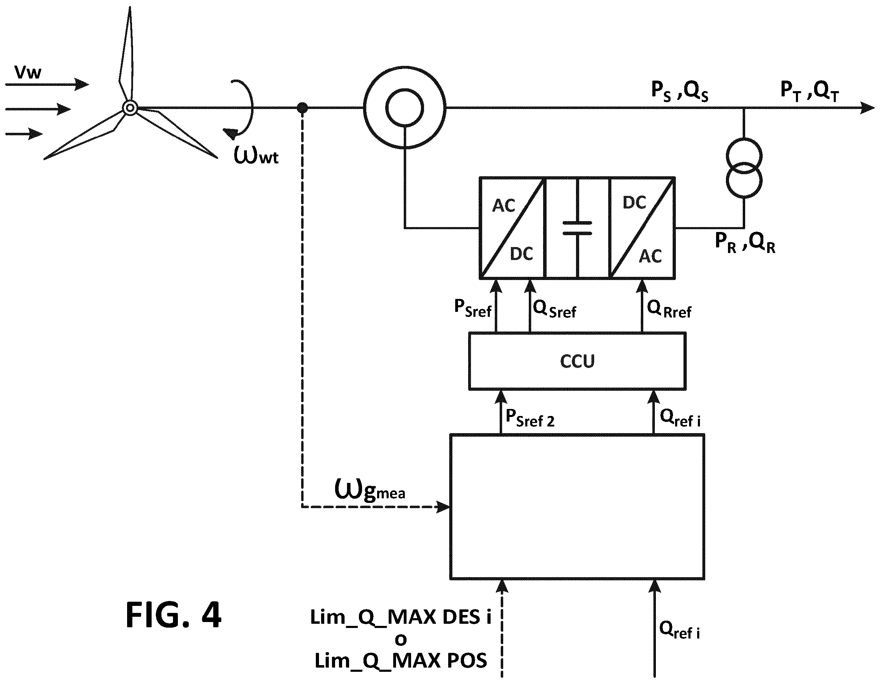

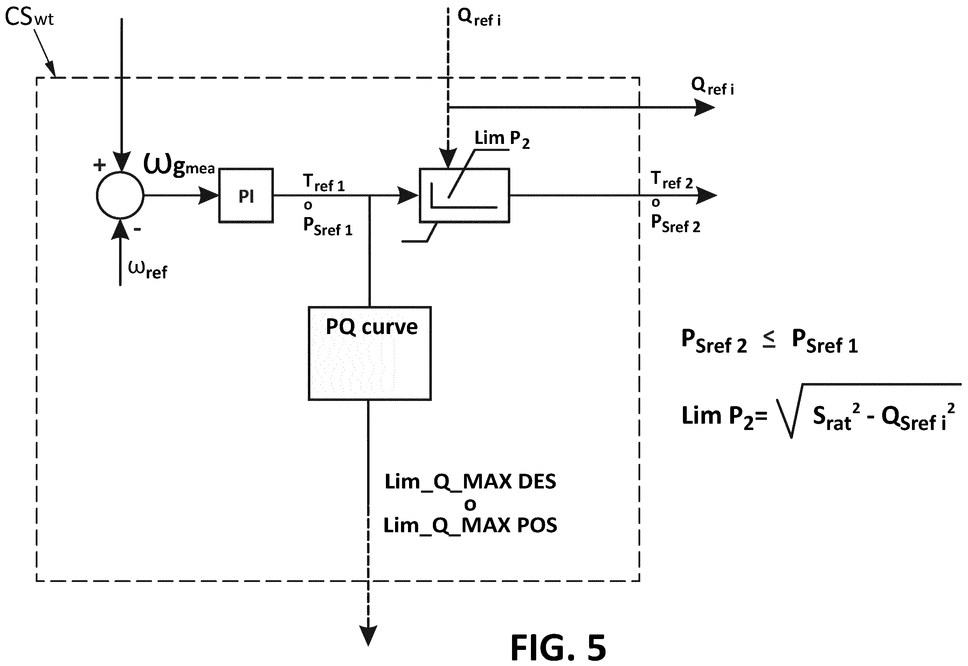

Figures 4 and 5 show a general diagram of the control system and control method of a wind turbine of the present invention.

Thus, the control system of the wind turbine is configured to calculate, based on an initial torque control Tref1 (or power Pref1) setpoint, a maximum reactive power limit desired (Lim_Q_Max_Des) which would allow not limiting the initial torque (or active power) control setpoint resulting from the control loops of the wind turbine and sending it to the control system of the wind farm. The initial torque (or power) control setpoint corresponds to a torque Tref1 (or power Pref1) setpoint to which limitations associated with at least one maximum electric capacity of a component of the electric drive (either of a generator or of a power converter) have not yet been applied; nonetheless, it can be limited based on the capacities of mechanical components.

This is because the generator and converter have different heating dynamics, with the power converter generally heating up more quickly than the generator, and therefore, they have a different capacity of withstanding currents greater than the rated current, capacity which will be dependent on the time when the current is greater than the rated current (which current can be withstood in steady-state).

In one embodiment, the step of calculating the maximum reactive power limit desired is performed when the operating conditions are such that the initial torque/active power control setpoint is greater than a maximum active power limit.

Depending on the control mode of the wind turbine (on the dynamics of the control loops of the wind turbine), i.e., the estimated time in which an above-normal active power is going to be generated (which may entail exceeding the at least one maximum electric capacity), permanent maximum electric capacities or transient maximum capacities both for the generator and for the converter will be used as a reference. In the particular case of slow dynamics corresponding to steady control, said maximum active power limit corresponds with the rated active power Prated.

If the control mode of the generator is such that an active power level which could cause the rated apparent power of the generator and/or converter to be exceeded in steady-state (i.e., a Pref1 such that sqrt(Pref^2+Qmax^2)>Srated) is allowed, the permanent maximum capacities of the generator and converter are used for calculating the at least one maximum reactive power limit desired.

The calculation will be performed as follows: $Lim_Qmax_des = sqrt \left({Srated}^{∧}2-{Pref 1}^{∧}2\right)$

The control method additionally comprises the following steps:
- receiving a reactive power setpoint required Qrefi from a control system of the wind farm (SGCS)
- calculating at least one maximum active power limit LimP2 based on:
   a. The at least one maximum electric capacity (it will be either transient or permanent) in the operating conditions of the wind turbine
   b. The reactive power setpoint received from the control system of the wind farm (SGCS) (Qrefi)
- Applying at least one maximum active power limit calculated in the step prior to the initial torque/active power control setpoint desired for calculating a final torque/active power control setpoint (Tref2 or Pref2).

The at least one maximum active power limit LimP2 will be calculated in one embodiment as follows: $LimP 2 = sqrt \left({Sperm}^{∧}2-{Qrefi}^{∧}2\right)$

The reactive power setpoint Qrefi received from the control system of the wind farm (SGCS) will be sent to the control system of the power converter for the control of the generator.

If P_{T}ref1<Prated, it is calculated a Lim_Qmax_pos > (Qrated=wind turbine minimum required capacity). On the contrary, if the operation conditions are such that P_{T}ref1<Prated, it is calculated a Lim_Qmax_des<Qrated, in order to benefit from the electrical capacity to generate power.

## Claims

1. A control system for a wind turbine configured to:
• calculate an initial torque/active power control setpoint desired based on the operating conditions of the wind turbine;
• calculate at least one maximum reactive power limit desired based on:
at least one maximum electric capacity in the operating conditions of the wind turbine; and
the initial torque/active power control setpoint desired,
such that it is not necessary to apply limitations to the initial torque/active power control setpoint desired and the at least one maximum electric capacity is not exceeded;
• send the at least one maximum reactive power limit desired lower than a rated reactive power required to a central control system of the farm;
**characterised in that** the control system is configured to:
• generate an active power greater than a rated active power without exceeding the limit set by an apparent power, by means of calculating the at least one maximum reactive power limit desired being lower than the rated reactive power required of the wind turbine;
• calculate a final reactive power setpoint based on the maximum reactive power limit desired; and
• send the final reactive power setpoint to the wind turbine.

2. The control system for a wind turbine according to claim 1, **characterised in that** it is configured to calculate the maximum reactive power limit desired when the operating conditions are such that the initial torque/active power control setpoint is greater than a maximum active power limit.

3. The control system for a wind turbine according to claim 1, **characterised in that** when the operating conditions are such that the initial torque/active power control setpoint is not greater than the maximum active power limit, the system is additionally configured to calculate a possible maximum reactive power limit based on:
at least one maximum electric capacity in the operating conditions of the wind turbine
the initial torque/active power control setpoint desired,
such that it is not necessary to apply limitations to the initial torque/active power control setpoint desired and the at least one maximum electric capacity is not exceeded;
• send the at least one possible maximum reactive power limit to a central control system of the farm.

4. The control system for a wind turbine according to claim 2, **characterised in that** the at least one maximum electric capacity corresponds at least to a maximum electric capacity of a generator and to a maximum electric capacity of a power converter.

5. The control system for a wind turbine according to claim 4, **characterised in that**, depending on the control mode of the wind turbine, namely the estimated time in which an above-normal active power is going to be generated, which may entail exceeding the at least one maximum electric capacity, the control system uses as a reference permanent maximum electric capacities or transient maximum capacities both for the generator and for the converter.

6. The control system for a wind turbine according any one of claims 1 to 5 **characterised in that**, if the control mode of the generator is such that an active power level which could cause the rated apparent power in steady-state of the generator and/or converter to be exceeded is allowed (i.e., a Pref such that sprt(Pref^2+Qmax^2)>Sperm), the control system uses the permanent maximum capacities of the generator and converter for calculating the at least one maximum reactive power limit desired.

7. The control system for a wind turbine according to claim 2, **characterised in that** for controls in which the power can be increased such that sprt(Pref^2+Qmax^2)>Srated for a time of not more than 10 minutes, the control system takes into account a transient maximum capacity of the generator and a permanent maximum capacity of the converter.

8. The control system for a wind turbine according to any of claims 1 to 5, **characterised in that** for controls in which the power can be increased above the rated power for a time of not more than tenths of a second, the control system takes into account a transient maximum capacity of the generator and a permanent maximum capacity of the converter.

9. The control system for a wind turbine according to any one of claims 1 to 7 **characterised in that** the control system is configured to additionally:
• receive a required reactive power setpoint from a control system of the wind farm (SGCS)
• calculate at least one maximum active power limit based on:
the at least one maximum electric capacity in the operating conditions of the wind turbine;
the reactive power setpoint received from the control system of the wind farm (SGCS);
• apply at least one maximum active power limit calculated in the step prior to the initial torque/active power control setpoint desired for calculating a final torque/active power control setpoint.

10. The control system for a wind turbine according to claim 3, **characterised in that** the at least one maximum electric capacity is of at least one of the following types:
• permanent
• transient (ten minutes)
• transient (seconds).

11. A control method of a wind turbine comprising the following steps:
• calculating an initial torque/active power control setpoint desired based on the operating conditions of the wind turbine;
• calculating at least one maximum reactive power limit desired based on:
at least one maximum electric capacity in the operating conditions of the wind turbine
the initial torque/active power control setpoint desired,
such that it is not necessary to apply limitations to the initial torque/active power control setpoint desired and the at least one maximum electric capacity is not exceeded;
• sending the at least one maximum reactive power limit desired lower than a rated reactive power required to a central control system of the farm;
**characterised in that** the method also comprises the steps of:
• generating an active power greater than a rated active power without exceeding the limit set by an apparent power, by means of a step of:
∘ calculating the at least one maximum reactive power limit desired being lower than the rated reactive power required of the wind turbine;
• calculating a final reactive power setpoint based on the maximum reactive power limit desired; and
• sending the final reactive power setpoint to the wind turbine.

12. Control method of a wind turbine according to claim 11, **characterised in that** the step of calculating the maximum reactive power limit desired is performed when the operating conditions are such that the initial torque/active power control setpoint is greater than a maximum active power limit.

13. Control method of a wind turbine according to claim 11, **characterised in that** when the operating conditions are such that the initial torque/active power control setpoint is not greater than the maximum active power limit it additionally comprises the step of calculating a possible maximum reactive power limit based on:
at least one maximum electric capacity in the operating conditions of the wind turbine
the initial torque/active power control setpoint desired,
such that it is not necessary to apply limitations to the initial torque/active power control setpoint desired and the at least one maximum electric capacity is not exceeded;
• send the at least one possible maximum reactive power limit to a central control system of the farm.

14. Control method of a wind turbine according to claim 12, **characterised in that** the at least one maximum electric capacity corresponds at least to a maximum electric capacity of a generator and to a maximum electric capacity of a power converter.

15. Control method of a wind turbine according to claim 14, **characterised in that** depending on the control mode of the wind turbine, i.e., the estimated time in which an above-normal active power is going to be generated, which may entail exceeding the at least one maximum electric capacity, permanent maximum electric capacities or transient maximum capacities both for the generator and for the converter will be used as a reference.

16. Control method of a wind turbine according to any of claims 11 to 15, **characterised in that** if the control mode of the generator is such that an active power level which could cause the rated apparent power in steady-state of the generator and/or converter to be exceeded is allowed, namely a Pref such that sprt(Pref^2+Qmax^2)>Sperm, the permanent maximum capacities of the generator and converter are used for calculating the at least one maximum reactive power limit desired.

17. Control method of a wind turbine according to claim 12, **characterised in that** for controls in which the power can be increased such that sprt(Pref^2+Qmax^2)>Srated for a time of not more than 10 minutes, a transient maximum capacity of the generator and a permanent maximum capacity of the converter are taken into account.

18. Control method of a wind turbine according to any of claims 11 to 15, **characterised in that** for controls in which the power can be increased above the rated power for a time of not more than tenths of a second, a transient maximum capacity of the generator and a permanent maximum capacity of the converter are taken into account.

19. Control method of a wind turbine according to any of claims 11 to 17, **characterised in that** it additionally comprises the following steps:
• receiving a required reactive power setpoint from a control system of the wind farm (SGCS)
• calculating at least one maximum active power limit based on:
the at least one maximum electric capacity in the operating conditions of the wind turbine
the reactive power setpoint received from the control system of the wind farm (SGCS)
• applying at least one maximum active power limit calculated in the step prior to the initial torque/active power control setpoint desired for calculating a final torque/active power control setpoint.

20. Control method of a wind turbine according to claim 13, **characterised in that** the at least one maximum electric capacity is of at least one of the following types:
• Permanent
• Transient (ten minutes)
• Transient (seconds).

## Patentansprüche

1. Steuerungssystem für eine Windturbine, das zu Folgendem konfiguriert ist:
• Berechnen eines gewünschten anfänglichen Drehmoment-/Wirkleistungssteuerungssollwerts basierend auf den Betriebsbedingungen der Windturbine;
• Berechnen mindestens eines gewünschten maximalen Blindleistungsgrenzwerts basierend auf:
mindestens einer maximalen elektrischen Kapazität unter den Betriebsbedingungen der Windturbine; und
dem gewünschten anfänglichen Drehmoment-/Wirkleistungssteuerungssollwert,
sodass es nicht erforderlich ist, Einschränkungen auf den gewünschten anfänglichen Drehmoment-/Wirkleistungssteuerungssollwert anzuwenden, und die mindestens eine maximale elektrische Kapazität nicht überschritten wird;
• Senden des mindestens einen gewünschten maximalen Blindleistungsgrenzwerts, der niedriger ist als eine erforderliche Nennblindleistung, an ein zentrales Steuerungssystem des Parks;
**dadurch gekennzeichnet, dass** das Steuerungssystem zu Folgendem konfiguriert ist:
• Generieren einer Wirkleistung, die größer ist als eine Nennwirkleistung, ohne den durch eine Scheinleistung festgelegten Grenzwert zu überschreiten, indem der mindestens eine gewünschte maximale Blindleistungsgrenzwert so berechnet wird, dass er niedriger ist als die für die Windturbine erforderliche Nennblindleistung;
• Berechnen eines endgültigen Blindleistungssollwerts basierend auf dem gewünschten maximalen Blindleistungsgrenzwert; und
• Senden des endgültigen Blindleistungssollwerts an die Windturbine.

2. Steuerungssystem für eine Windturbine nach Anspruch 1, **dadurch gekennzeichnet, dass** es dazu konfiguriert ist, den gewünschten maximalen Blindleistungsgrenzwert zu berechnen, wenn die Betriebsbedingungen so sind, dass der anfängliche Drehmoment-/Wirkleistungssteuerungssollwert größer ist als ein maximaler Wirkleistungsgrenzwert.

3. Steuerungssystem für eine Windturbine nach Anspruch 1, **dadurch gekennzeichnet, dass**, wenn die Betriebsbedingungen derart sind, dass der anfängliche Drehmoment-/Wirkleistungssteuerungssollwert nicht größer ist als der maximale Wirkleistungsgrenzwert, das System zusätzlich dazu konfiguriert ist, einen möglichen maximalen Blindleistungsgrenzwert zu berechnen, basierend auf:
mindestens einer maximalen elektrischen Kapazität unter den Betriebsbedingungen der Windturbine
dem gewünschten anfänglichen Drehmoment-/Wirkleistungssteuerungssollwert,
sodass es nicht erforderlich ist, Einschränkungen auf den gewünschten anfänglichen Drehmoment-/Wirkleistungssteuerungssollwert anzuwenden, und die mindestens eine maximale elektrische Kapazität nicht überschritten wird;
• Senden des mindestens einen möglichen maximalen Blindleistungsgrenzwerts an ein zentrales Steuerungssystem des Parks.

4. Steuerungssystem für eine Windturbine nach Anspruch 2, **dadurch gekennzeichnet, dass** die mindestens eine maximale elektrische Kapazität mindestens einer maximalen elektrischen Kapazität eines Generators und einer maximalen elektrischen Kapazität eines Leistungswandlers entspricht.

5. Steuerungssystem für eine Windturbine nach Anspruch 4, **dadurch gekennzeichnet, dass** abhängig vom Steuerungsmodus der Windturbine, nämlich der geschätzten Zeit, in der eine über dem Normalwert liegende Wirkleistung generiert werden wird, was zu einer Überschreitung der mindestens einen maximalen elektrischen Kapazität führen kann, das Steuerungssystem sowohl für den Generator als auch für den Wandler permanente maximale elektrische Kapazitäten oder transiente maximale Kapazitäten als Referenz verwendet.

6. Steuerungssystem für eine Windturbine nach einem der Ansprüche 1 bis 5, **dadurch gekennzeichnet, dass**, falls der Steuerungsmodus des Generators derart ist, dass ein Wirkleistungspegel zugelassen wird, der eine Überschreitung der Nennscheinleistung des Generators und/oder des Wandlers im stationären Zustand verursachen könnte (d.h. eine PRef, sodass sprt(PRef^2+Qmax^2)>Sperm), das Steuerungssystem die permanenten maximalen Kapazitäten des Generators und des Wandlers zum Berechnen des mindestens einen gewünschten maximalen Blindleistungsgrenzwerts verwendet.

7. Steuerungssystem für eine Windturbine nach Anspruch 2, **dadurch gekennzeichnet, dass** für Steuerungen, bei denen die Leistung so erhöht werden kann, dass sprt(PRef^2+Qmax^2)>SNenn für eine Zeitdauer von nicht mehr als 10 Minuten, das Steuerungssystem eine transiente maximale Kapazität des Generators und eine permanente maximale Kapazität des Wandlers berücksichtigt.

8. Steuerungssystem für eine Windturbine nach einem der Ansprüche 1 bis 5, **dadurch gekennzeichnet, dass** für Steuerungen, bei denen die Leistung für eine Zeitdauer von nicht mehr als Zehntelsekunden über die Nennleistung hinaus erhöht werden kann, das Steuerungssystem eine transiente maximale Kapazität des Generators und eine permanente maximale Kapazität des Wandlers berücksichtigt.

9. Steuerungssystem für eine Windturbine nach einem der Ansprüche 1 bis 7, **dadurch gekennzeichnet, dass** das Steuerungssystem zusätzlich zu Folgendem konfiguriert ist:
• Empfangen eines erforderlichen Blindleistungssollwerts von einem Steuerungssystem des Windparks (SGCS)
• Berechnen mindestens eines maximalen Wirkleistungsgrenzwerts basierend auf:
der mindestens einen maximalen elektrischen Kapazität unter den Betriebsbedingungen der Windturbine;
dem vom Steuerungssystem des Windparks (SGCS) empfangenen Blindleistungssollwert;
• Anwenden mindestens eines maximalen Wirkleistungsgrenzwerts, der im vorherigen Schritt berechnet wurde, auf den anfänglichen Drehmoment-/Wirkleistungssteuerungssollwert zum Berechnen eines endgültigen Drehmoment-/Wirkleistungssteuerungssollwerts.

10. Steuerungssystem für eine Windturbine nach Anspruch 3, **dadurch gekennzeichnet, dass** die mindestens eine maximale elektrische Kapazität mindestens einem der folgenden Typen angehört:
• permanent
• transient (zehn Minuten)
• transient (Sekunden).

11. Steuerungsverfahren für eine Windturbine, umfassend die folgenden Schritte:
• Berechnen eines gewünschten anfänglichen Drehmoment-/Wirkleistungssteuerungssollwerts basierend auf den Betriebsbedingungen der Windturbine;
• Berechnen mindestens eines gewünschten maximalen Blindleistungsgrenzwerts basierend auf:
mindestens einer maximalen elektrischen Kapazität unter den Betriebsbedingungen der Windturbine
dem gewünschten anfänglichen Drehmoment-/Wirkleistungssteuerungssollwert,
sodass es nicht erforderlich ist, Einschränkungen auf den gewünschten anfänglichen Drehmoment-/Wirkleistungssteuerungssollwert anzuwenden, und die mindestens eine maximale elektrische Kapazität nicht überschritten wird;
• Senden des mindestens einen gewünschten maximalen Blindleistungsgrenzwerts, der niedriger ist als eine erforderliche Nennblindleistung, an ein zentrales Steuerungssystem des Parks;
**dadurch gekennzeichnet, dass** das Verfahren auch die folgenden Schritte umfasst:
• Generieren einer Wirkleistung, die größer ist als eine Nennwirkleistung, ohne den durch eine Scheinleistung festgelegten Grenzwert zu überschreiten, durch einen Schritt zum:
○ Berechnen des mindestens einen gewünschten maximalen Blindleistungsgrenzwerts, der niedriger ist als die für die Windturbine erforderliche Nennblindleistung;
• Berechnen eines endgültigen Blindleistungssollwerts basierend auf dem gewünschten maximalen Blindleistungsgrenzwert; und
• Senden des endgültigen Blindleistungssollwerts an die Windturbine.

12. Steuerungsverfahren für eine Windturbine nach Anspruch 11, **dadurch gekennzeichnet, dass** der Schritt zum Berechnen des gewünschten maximalen Blindleistungsgrenzwerts durchgeführt wird, wenn die Betriebsbedingungen so sind, dass der anfängliche Drehmoment-/Wirkleistungssteuerungssollwert größer ist als ein maximaler Wirkleistungsgrenzwert.

13. Steuerungsverfahren für eine Windturbine nach Anspruch 11, **dadurch gekennzeichnet, dass**, wenn die Betriebsbedingungen derart sind, dass der anfängliche Drehmoment-/Wirkleistungssteuerungssollwert nicht größer ist als der maximale Wirkleistungsgrenzwert, es zusätzlich den Schritt des Berechnens eines möglichen maximalen Blindleistungsgrenzwerts umfasst, basierend auf:
mindestens einer maximalen elektrischen Kapazität unter den Betriebsbedingungen der Windturbine
dem gewünschten anfänglichen Drehmoment-/Wirkleistungssteuerungssollwert,
sodass es nicht erforderlich ist, Einschränkungen auf den gewünschten anfänglichen Drehmoment-/Wirkleistungssteuerungssollwert anzuwenden, und die mindestens eine maximale elektrische Kapazität nicht überschritten wird;
• Senden des mindestens einen möglichen maximalen Blindleistungsgrenzwerts an ein zentrales Steuerungssystem des Parks.

14. Steuerungsverfahren für eine Windturbine nach Anspruch 12, **dadurch gekennzeichnet, dass** die mindestens eine maximale elektrische Kapazität mindestens einer maximalen elektrischen Kapazität eines Generators und einer maximalen elektrischen Kapazität eines Leistungswandlers entspricht.

15. Steuerungsverfahren für eine Windturbine nach Anspruch 14, **dadurch gekennzeichnet, dass** abhängig vom Steuerungsmodus der Windturbine, d. h. der geschätzten Zeit, in der eine über dem Normalwert liegende Wirkleistung generiert werden wird, was zu einer Überschreitung der mindestens einen maximalen elektrischen Kapazität führen kann, sowohl für den Generator als auch für den Wandler permanente maximale elektrische Kapazitäten oder transiente maximale Kapazitäten als Referenz verwendet werden.

16. Steuerungsverfahren für eine Windturbine nach einem der Ansprüche 11 bis 15, **dadurch gekennzeichnet, dass**, falls der Steuerungsmodus des Generators derart ist, dass ein Wirkleistungspegel zugelassen wird, der eine Überschreitung der Nennscheinleistung des Generators und/oder des Wandlers im stationären Zustand verursachen könnte, nämlich eine PRef, sodass sprt(PRef^2+Qmax^2)>Sperm, die permanenten maximalen Kapazitäten des Generators und des Wandlers zum Berechnen des mindestens einen gewünschten maximalen Blindleistungsgrenzwerts verwendet werden.

17. Steuerungsverfahren für eine Windturbine nach Anspruch 12, **dadurch gekennzeichnet, dass** für Steuerungen, bei denen die Leistung so erhöht werden kann, dass sprt(PRef^2+Qmax^2)>SNenn für eine Zeitdauer von nicht mehr als 10 Minuten, eine transiente maximale Kapazität des Generators und eine permanente maximale Kapazität des Wandlers berücksichtigt werden.

18. Steuerungsverfahren für eine Windturbine nach einem der Ansprüche 11 bis 15, **dadurch gekennzeichnet, dass** für Steuerungen, bei denen die Leistung für eine Zeitdauer von nicht mehr als Zehntelsekunden über die Nennleistung hinaus erhöht werden kann, eine transiente maximale Kapazität des Generators und eine permanente maximale Kapazität des Wandlers berücksichtigt werden.

19. Steuerungsverfahren für eine Windturbine nach einem der Ansprüche 11 bis 17, **dadurch gekennzeichnet, dass** es zusätzlich die folgenden Schritte umfasst:
• Empfangen eines erforderlichen Blindleistungssollwerts von einem Steuerungssystem des Windparks (SGCS)
• Berechnen mindestens eines maximalen Wirkleistungsgrenzwerts basierend auf:
der mindestens einen maximalen elektrischen Kapazität unter den Betriebsbedingungen der Windturbine
dem vom Steuerungssystem des Windparks (SGCS) empfangenen Blindleistungssollwert
• Anwenden mindestens eines maximalen Wirkleistungsgrenzwerts, der im vorherigen Schritt berechnet wurde, auf den anfänglichen Drehmoment-/Wirkleistungssteuerungssollwert zum Berechnen eines endgültigen Drehmoment-/Wirkleistungssteuerungssollwerts.

20. Steuerungsverfahren für eine Windturbine nach Anspruch 13, **dadurch gekennzeichnet, dass** die mindestens eine maximale elektrische Kapazität mindestens einem der folgenden Typen angehört:
• permanent
• transient (zehn Minuten)
• transient (Sekunden).

## Revendications

1. Système de commande pour une éolienne configuré pour :
• calculer une consigne initiale de commande de couple / de puissance active souhaitée en fonction des conditions de fonctionnement de l'éolienne ;
• calculer au moins une limite de puissance réactive maximale souhaitée en fonction de :
au moins une capacité électrique maximale dans les conditions fonctionnelles de l'éolienne ; et
la consigne initiale de commande de couple / de puissance active souhaitée,
de telle sorte qu'il n'est pas nécessaire d'appliquer des limitations à la consigne initiale de commande de couple / de puissance active souhaitée et que l'au moins une capacité électrique maximale n'est pas dépassée ;
• envoyer l'au moins une limite de puissance réactive maximale souhaitée inférieure à une puissance réactive nominale requise à un système de commande central du parc ;
**caractérisé en ce que** le système de commande est configuré pour :
• générer une puissance active supérieure à une puissance active nominale sans dépasser la limite fixée par une puissance apparente, par le calcul de l'au moins une limite de puissance réactive maximale souhaitée étant inférieure à la puissance réactive nominale requise de l'éolienne ;
• calculer une consigne finale de puissance réactive en fonction de la limite de puissance réactive maximale souhaitée ; et
• envoyer la consigne finale de puissance réactive à l'éolienne.

2. Système de commande pour une éolienne selon la revendication 1, **caractérisé en ce qu'**il est configuré pour calculer la limite de puissance réactive maximale souhaitée lorsque les conditions de fonctionnement sont telles que la consigne initiale de commande de couple / de puissance active est supérieure à une limite de puissance active maximale.

3. Système de commande pour une éolienne selon la revendication 1, **caractérisé en ce que**, lorsque les conditions de fonctionnement sont telles que la consigne initiale de commande de couple / de puissance active n'est pas supérieure à la limite de puissance active maximale, le système est en outre configuré pour calculer une limite de puissance réactive maximale possible en fonction de :
au moins une capacité électrique maximale dans les conditions fonctionnelles de l'éolienne
la consigne initiale de commande de couple / de puissance active souhaitée,
de telle sorte qu'il n'est pas nécessaire d'appliquer des limitations à la consigne initiale de commande de couple / de puissance active souhaitée et que l'au moins une capacité électrique maximale n'est pas dépassée ;
• envoyer l'au moins une limite de puissance réactive maximale possible à un système de commande central du parc.

4. Système de commande pour une éolienne selon la revendication 2, **caractérisé en ce que** l'au moins une capacité électrique maximale correspond au moins à une capacité électrique maximale d'un générateur et à une capacité électrique maximale d'un convertisseur de puissance.

5. Système de commande pour une éolienne selon la revendication 4, **caractérisé en ce que**, selon le mode de commande de l'éolienne, à savoir le temps estimé pendant lequel une puissance active au-dessus de la normale va être générée, ce qui peut entraîner le dépassement de l'au moins une capacité électrique maximale, le système de commande utilise comme référence des capacités électriques maximales permanentes ou des capacités maximales transitoires, tant pour le générateur que pour le convertisseur.

6. Système de commande pour une éolienne selon l'une quelconque des revendications 1 à 5, **caractérisé en ce que**, si le mode de commande du générateur est tel qu'un niveau de puissance active susceptible de provoquer le dépassement de la puissance apparente nominale en régime permanent du générateur et/ou du convertisseur est autorisé (c'est-à-dire une Pref telle que sprt(Pref^2+Qmax^2)>Sperm), le système de commande utilise les capacités maximales permanentes du générateur et du convertisseur pour calculer l'au moins une limite de puissance réactive maximale souhaitée.

7. Système de commande pour une éolienne selon la revendication 2, **caractérisé en ce que**, pour les commandes dans lesquelles la puissance peut être augmentée de telle sorte que sprt(Pref^2+Qmax^2)>Srated pendant une durée de pas plus de 10 minutes, le système de commande prend en compte une capacité maximale transitoire du générateur et une capacité maximale permanente du convertisseur.

8. Système de commande pour une éolienne selon l'une quelconque des revendications 1 à 5, **caractérisé en ce que**, pour les commandes dans lesquelles la puissance peut être augmentée au-dessus de la puissance nominale pendant une durée ne pas plus de quelques dixièmes de seconde, le système de commande prend en compte une capacité maximale transitoire du générateur et une capacité maximale permanente du convertisseur.

9. Système de commande pour une éolienne selon l'une quelconque des revendications 1 à 7, **caractérisé en ce que** le système de commande est configuré pour, en outre :
• recevoir une consigne de puissance réactive requise d'un système de commande du parc éolien (SGCS)
• calculer au moins une limite de puissance active maximale en fonction de :
l'au moins une capacité électrique maximale dans les conditions fonctionnelles de l'éolienne ;
la consigne de puissance réactive reçue du système de commande du parc éolien (SGCS) ;
• appliquer au moins une limite de puissance active maximale calculée à l'étape précédant la consigne initiale de commande de couple / de puissance active souhaitée pour le calcul d'une consigne finale de commande de couple / de puissance active.

10. Système de commande pour une éolienne selon la revendication 3, **caractérisé en ce que** l'au moins une capacité électrique maximale est d'au moins l'un des types suivants :
• permanente
• transitoire (dix minutes)
• transitoire (secondes).

11. Procédé de commande d'une éolienne comprenant les étapes suivantes :
• le calcul d'une consigne initiale de commande de couple / de puissance active souhaitée en fonction des conditions de fonctionnement de l'éolienne ;
• le calcul d'au moins une limite de puissance réactive maximale souhaitée en fonction de :
au moins une capacité électrique maximale dans les conditions fonctionnelles de l'éolienne
la consigne initiale de commande de couple / de puissance active souhaitée,
de telle sorte qu'il n'est pas nécessaire d'appliquer des limitations à la consigne initiale de commande de couple / de puissance active souhaitée et que l'au moins une capacité électrique maximale n'est pas dépassée ;
• l'envoi de l'au moins une limite de puissance réactive maximale souhaitée inférieure à une puissance réactive nominale requise à un système de commande central du parc ;
**caractérisé en ce que** le procédé comprend également les étapes de :
• génération d'une puissance active supérieure à une puissance active nominale sans dépasser la limite fixée par une puissance apparente, au moyen d'une étape de :
○ calcul de l'au moins une limite de puissance réactive maximale souhaitée inférieure à la puissance réactive nominale requise de l'éolienne ;
• calcul d'une consigne finale de puissance réactive en fonction de la limite de puissance réactive maximale souhaitée ; et
• envoi de la consigne finale de puissance réactive à l'éolienne.

12. Procédé de commande d'une éolienne selon la revendication 11, **caractérisé en ce que** l'étape de calcul de la limite de puissance réactive maximale souhaitée est effectuée lorsque les conditions fonctionnelles sont telles que la consigne initiale de commande de couple / de puissance active est supérieure à une limite de puissance active maximale.

13. Procédé de commande d'une éolienne selon la revendication 11, **caractérisé en ce que**, lorsque les conditions de fonctionnement sont telles que la consigne initiale de commande de couple / de puissance active n'est pas supérieure à la limite de puissance active maximale, il comprend en outre l'étape de calcul d'une limite de puissance réactive maximale possible fonction de :
au moins une capacité électrique maximale dans les conditions fonctionnelles de l'éolienne
la consigne initiale de commande de couple / de puissance active souhaitée,
de telle sorte qu'il n'est pas nécessaire d'appliquer des limitations à la consigne initiale de commande de couple / de puissance active souhaitée et que l'au moins une capacité électrique maximale n'est pas dépassée ;
• envoyer l'au moins une limite de puissance réactive maximale possible à un système de commande central du parc.

14. Procédé de commande d'une éolienne selon la revendication 12, **caractérisé en ce que** l'au moins une capacité électrique maximale correspond au moins à une capacité électrique maximale d'un générateur et à une capacité électrique maximale d'un convertisseur de puissance.

15. Procédé de commande d'une éolienne selon la revendication 14, **caractérisé en ce que**, selon le mode de commande de l'éolienne, c'est-à-dire du temps estimé pendant lequel une puissance active au-dessus de la normale va être générée, ce qui peut entraîner le dépassement de l'au moins une capacité électrique maximale, des capacités électriques maximales permanentes ou des capacités maximales transitoires, tant pour le générateur que pour le convertisseur, seront utilisées comme référence.

16. Procédé de commande d'une éolienne selon l'une quelconque des revendications 11 à 15, **caractérisé en ce que**, si le mode de commande du générateur est tel qu'un niveau de puissance active susceptible de provoquer un dépassement de la puissance apparente nominale en régime permanent du générateur et/ou du convertisseur est autorisé, à savoir une Pref telle que sprt(Pref^2+Qmax^{Λ}2)>Sperm, les capacités maximales permanentes du générateur et du convertisseur sont utilisées pour calculer l'au moins une limite de puissance réactive maximale souhaitée.

17. Procédé de commande d'une éolienne selon la revendication 12, **caractérisé en ce que**, pour les commandes dans lesquelles la puissance peut être augmentée de telle sorte que sprt(Pref^2+Qmax^2)>Srated pendant une durée de pas plus de 10 minutes, une capacité maximale transitoire du générateur et une capacité maximale permanente du convertisseur sont prises en compte.

18. Procédé de commande d'une éolienne selon l'une quelconque des revendications 11 à 15, **caractérisé en ce que**, pour les commandes dans lesquelles la puissance peut être augmentée au-dessus de la puissance nominale pendant une durée ne pas plus de quelques dixièmes de seconde, le système de commande prend en compte une capacité maximale transitoire du générateur et une capacité maximale permanente du convertisseur.

19. Procédé de commande d'une éolienne selon l'une quelconque des revendications 11 à 17, **caractérisé en ce qu'**il comprend en outre les étapes suivantes :
• la réception d'une consigne de puissance réactive requise d'un système de commande du parc éolien (SGCS)
• le calcul d'au moins une limite de puissance active maximale en fonction de :
l'au moins une capacité électrique maximale dans les conditions fonctionnelles de l'éolienne
la consigne de puissance réactive reçue du système de commande du parc éolien (SGCS)
• l'application d'au moins une limite de puissance active maximale calculée à l'étape précédant la consigne initiale de commande de couple / de puissance active souhaitée pour le calcul d'une consigne finale de commande de couple / de puissance active.

20. Procédé de commande d'une éolienne selon la revendication 13, **caractérisé en ce que** l'au moins une capacité électrique maximale est d'au moins l'un des types suivants :
• Permanente
• Transitoire (dix minutes)
• Transitoire (secondes).
